# EUROPEAN PATENT APPLICATION

(11) **EP 4 125 008 A1**
(43) Date of publication of application: **01.02.2023**
(21) Application number: 22186189.1
(22) Date of filing: 21.07.2022
(51) Int. Cl.: G06N 3/08

(54) **SHRINK DARTS**

(30) Priority: 23.07.2021 US 202163225435 P; 08.09.2021 US 202117469853
(71) Applicant: Samsung Electronics Co., Ltd., Gyeonggi-do, 16677 (KR)
(72) Inventor: FANG, Jun, San Jose, CA, 95134 (US); SHEN, Chengyao, San Jose, CA, 95134 (US); THORSLEY, David Philip Lloyd, San Jose, CA, 95134 (US); HASSOUN, Joseph, San Jose, CA, 95134 (US)
(74) Representative: Kuhnen & Wacker Patent- und Rechtsanwaltsbüro PartG mbB

(57) **Abstract**

A method is disclosed for reducing computation of a differentiable architecture search. An output node is formed having a channel dimension that is one-fourth of a channel dimension of a normal cell of a neural network architecture by averaging channel outputs of intermediate nodes of the normal cell. The output node is preprocessed using a 1 x 1 convolution to form channels of input nodes for a next layer of the cells in the neural network architecture. Forming the output node includes forming s groups of channel outputs of the intermediate nodes by dividing the channel outputs of the intermediate nodes by a splitting parameter s. An average channel output for each group of channel outputs is formed, and the output node is formed by concatenating the average channel output for each group of channels with channel outputs of the intermediate nodes of the normal cell.

## Description

### TECHNICAL FIELD

The subject matter disclosed herein relates to neural networks. More particularly, the subject matter disclosed herein relates to a technique for reducing computation and parameters associated with a differentiable architecture search normal cell architecture

### BACKGROUND

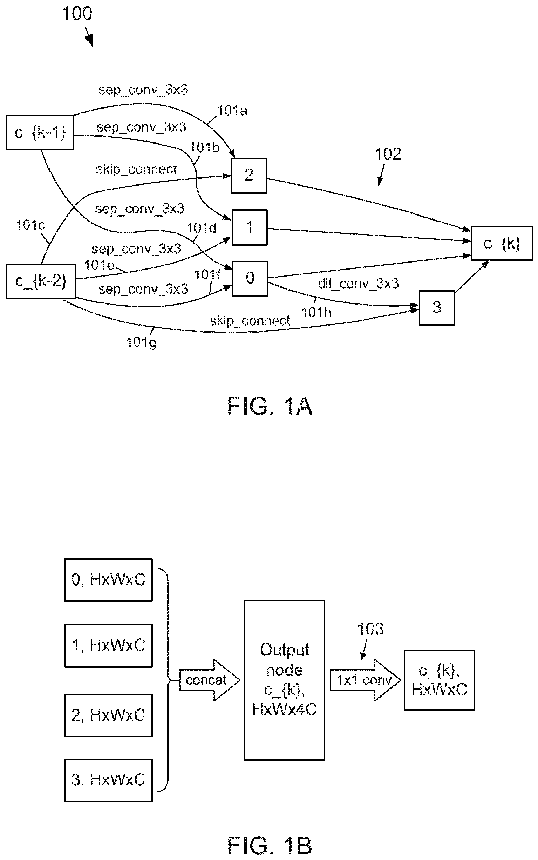

FIG. 1A shows a Differentiable ARchiTecture Search (DARTS) normal cell architecture 100 that has been learned on the CIFAR-10 database. As used herein, the term "normal cell" means a normal DARTS cell that has been learned on the CIFAR-10 dataset. The DARTS normal cell architecture 100 includes two (2) preprocessed input nodes c_{k-2} and c _{k-1}, four (4) intermediate nodes (nodes 0-3), eight (8) connections (or operations) 101a-101h between the intermediate nodes 0-3. The eight operations may include, but are not limited to, separate convolutions (sep_conv), skip connection (skip _connect), and dilated convolutions (dil_conv). Although a 3x3 kernel is indicated as part of the labeling for the convolutions, 5x5 and 7x7 kernels are also possible. Outputs from the four intermediate nodes are concatenated at 102 to form an output node c_{k}.

FIG. 1B shows preprocessing the output node c_{k} at 103 using a 1x1 convolution is not computationally inexpensive. Intrinsic information that is extracted from the output node c_{k} to form input channels c in results in four channels of feature maps being added to the cell, as indicated in FIG. 1B. That is, the feature maps output from each of the four intermediate nodes 0-3 have a dimension of H × W × C in which H is the height dimension, W is the width dimension, and C is the channel dimension of the feature maps. The outputs of the four intermediate nodes 0-3 are concatenated to form the output node c_{k} having a dimension of H x W x 4C. The number of parameters also increases as 2 × (1 × 1 × C_in × C_out) = 8 x C x C, and the number of computations increases as 2 × (H × W × C out × 1 × 1 × C in) = 8 × H × W × C × C. In addition to the increase in the number of computations based on the increase in the number of channels, there are the eight other operations 101a-101h associated with the normal cell: C in = C out = C; sep conv 3x3: two applications of 3x3 depth-wise + 1x1 point-wise; and 1x1 point-wise dominants of the parameters and floating-point operations (flops). Thus, the total number of parameters ≈ 8 × 2 × (1 × 1 × C_in × C out) = 16 × C × C, and a total number of computations ≈ 8 × 2 × (H × W × C out × 1 × 1 × C out) = 16 × H × W × C × C. Accordingly, preprocessing may contribute around 8/(8 + 16) = 1/3 of the total parameters and total computations.

### SUMMARY

An example embodiment provides a method for reducing computation of a differentiable architecture search in which the method may include forming an output node having a channel dimension that is one-fourth of a channel dimension of a normal cell for a first layer of the cells in a neural network architecture by averaging channel outputs of intermediate nodes of the normal cell; and preprocessing the output node having the channel dimension that is one-fourth of the channel dimension of a normal cell using a 1 × 1 convolution to form channels of input nodes for a second layer of the cells in the neural network architecture in which the second layer may be immediately subsequent to the first layer. In one embodiment, forming the output node having a single channel for the normal cell for the first layer of the cells in the neural network architecture may include: forming s groups of channel outputs of the intermediate nodes in which each group may include a total number of channel outputs of the intermediate nodes divided by a splitting parameter s; forming an average channel output for each group of channel outputs by averaging each group of channel outputs; and forming the output node by concatenating the average channel output for each group of channels with channel outputs of the intermediate nodes of the normal cell. In one embodiment, the method may further include changing a number of output channels of the first layer of the cells in the neural network architecture with respect to a number of input channels of the first layer. In another embodiment, changing the number of output channels of the first layer of the cells in the neural network architecture may include increasing the number of output channels of the first layer of the cells in the neural network architecture with respect to the number of input channels of the first layer. In still another embodiment, forming the output node having the channel dimension that is one-fourth of the channel dimension of a normal cell may include forming the output node by averaging channel outputs of intermediate nodes of the normal cell or by selecting a maximum output from intermediate nodes of the normal cell. In yet another embodiment, forming the output node having the channel dimension that is one-fourth of the channel dimension of a normal cell may further include forming the output node by averaging channel outputs of intermediate nodes of the normal cell or by performing a weighted average of the channel outputs of intermediate nodes of the normal cell. In one embodiment, the weighted average may be performed on channel outputs of intermediate nodes, and the method may further include batch normalizing the output node of the first layer of the cells in the neural network architecture. Another embodiment may further include generating a first predetermined number of intrinsic feature maps for the first layer of the cells in the neural network architecture in which the first predetermined number may be less than a second predetermined number that may be equal to a total number of output nodes for the first layer; and using one or more linear transformation operators to generate a third predetermined number of correlated or redundant output nodes for the first layer in which the first predetermined number plus the third predetermined number may equal the second predetermined number.

An example embodiment provides a method for reducing computation of a differentiable architecture search in which the method may include: forming an output node having a channel dimension that is one-fourth of a channel dimension of a normal cell for a first layer of the cells in a neural network architecture by selecting a maximum channel output from intermediate nodes of the normal cell; and preprocessing the output node having the channel dimension that is one-fourth of the channel dimension of a normal cell using a 1 × 1 convolution to form channels of input nodes for a second layer of the cells in the neural network architecture in which the second layer may be immediately subsequent to the first layer. In one embodiment, forming the output node having the channel dimension that is one-fourth of the channel dimension of a normal cell may include: forming s groups of channel outputs of the intermediate nodes in which each group includes a total number of channel outputs of the intermediate nodes divided by a splitting parameter s; selecting a maximum channel output for each group of channel outputs; and forming the output node by concatenating the maximum channel output for each group of channels with channel outputs of the intermediate nodes of the normal cell. In another embodiment, the method may further include changing a number of output channels of the first layer of the architecture with respect to a number of input channels of the first layer. In one embodiment, changing the number of output channels of the first layer of the cells in neural network architecture may include increasing the number of output channels of the first layer of the cells in the neural network architecture with respect to the number of input channels of the first layer. In another embodiment, forming the output node having the channel dimension that is one-fourth of the channel dimension of a normal cell may include forming the output node by selecting a maximum output from intermediate nodes of the normal cell or by averaging channel outputs of intermediate nodes of the normal cell. In still another embodiment, forming the output node having the channel dimension that is one-fourth of the channel dimension of a normal cell may further include forming the output node by selecting a maximum output from intermediate nodes of the normal cell or by performing a weighted average of channel outputs of intermediate nodes of the normal cell. In yet another embodiment, a weighted average is performed on channel outputs of intermediate nodes, and the method may further include batch normalizing the output node of the first layer of the cells in the neural network architecture. In one embodiment, the method may further include generating a first predetermined number of intrinsic feature maps for the first layer of the cells in the neural network architecture in which the first predetermined number may be less than a second predetermined number that may be equal to a total number of output nodes for the first layer; and using one or more linear transformation operators to generate a third predetermined number of correlated or redundant output nodes for the first layer in which the first predetermined number plus the third predetermined number may equal the second predetermined number.

An example embodiment provides a method for reducing computation of a differentiable architecture search that may include: forming an output node having a channel dimension that is one-fourth of a channel dimension of a normal cell for a first layer of a neural network architecture by performing a weighted average of channel outputs of intermediate nodes of the normal cell; and preprocessing the output node having the channel dimension that is one-fourth of the channel dimension of a normal cell using a 1 × 1 convolution to form channels of input nodes for a second layer of the cells in the neural network architecture in which the second layer may be immediately subsequent to the first layer. In one embodiment, forming the output node having the channel dimension that is one-fourth of the channel dimension of a normal cell may include: forming s groups of channel outputs of the intermediate nodes in which each group includes a total number of channel outputs of the intermediate nodes divided by a splitting parameter s; forming a weighted-average channel output for each group of channel outputs by weight averaging each group of channel outputs; and forming the output node by concatenating the weighted-average channel output for each group of channels with channel outputs of the intermediate nodes of the normal cell. In one embodiment, forming the output node having the channel dimension that is one-fourth of the channel dimension of a normal cell further may include forming the output node by performing a weighted average of channel outputs of intermediate nodes of the normal cell or by averaging channel outputs of intermediate nodes of the normal cell. In another embodiment, forming the output node having the channel dimension that is one-fourth of the channel dimension of a normal cell may further include forming the output node by performing a weighted average of channel outputs of intermediate nodes of the normal cell or by selecting a maximum output from intermediate nodes of the normal cell.

### BRIEF DESCRIPTION OF THE DRAWING

In the following section, the aspects of the subject matter disclosed herein will be described with reference to exemplary embodiments illustrated in the figures, in which:
FIG. 1A shows a Differentiable ARchiTecture Search (DARTS) normal cell architecture that has been learned on the CIFAR-10 database;
FIG. 1B shows preprocessing the output node c_{k} of the normal cell architecture using a 1x1 convolution is not computationally inexpensive;
FIG. 2 depicts an example sequence of splitting and concatenating channels to form an output node c_{k} according to the subject matter disclosed herein;
FIG. 3 depicts an example layer of feature maps that are generated using one or more Ghost modules; and
FIG. 4 is a flowchart of an example embodiment of a method for reducing computation of a differentiable architecture search according to the subject matter disclosed herein.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth.

The subject matter disclosed herein provides a method for reducing the number of computations and the number of parameters involved with a DARTS search by using an average or alternatively using a maximum of the four intermediate nodes to produce an output node of a normal cell instead of a concatenation of the four intermediate nodes. Channel-wise averaging or maximum pooling reduces the number of channels by four.

For example, a base line number for an example neural network system may include 3.42 M parameters with 532.5 M flop computations. Using the DARTS shrinkage techniques disclosed herein may reduce the number of parameters to 2.4 M for the example neural network system, and may reduce the number of computations to 373 M flop, which is about a 30% reduction for both the number of parameters and the number of computations with only about a 0.15% reduction in accuracy.

One embodiment of the subject matter disclosed herein provides different DARTS shrinkage types that primarily differ based on how the output of a DARTS normal cell is generated. A hyper-parameter s in which s = 1 to 4 may be used for generating the output node c_{k}. The channels output from the intermediate nodes 0-4 of a DARTS normal cell for a given layer of a neural network architecture may be split, or grouped, into 1 to 4 sets depending on the selected hyper-parameter s so that each group has C / s channels. An average of the outputs of each grouped channels (i.e., average pooling) is determined. Alternatively, a maximize value in each group may be selected (i.e., max pooling). As another alternative, an adaptive averaging (ada pooling), which uses a weighted averaging, is determined. The output channels may then be concatenated (C / s) x 4 so that the output channel becomes 4C → (C / s) x 4. Different layers of a neural network architecture may have different split configurations.

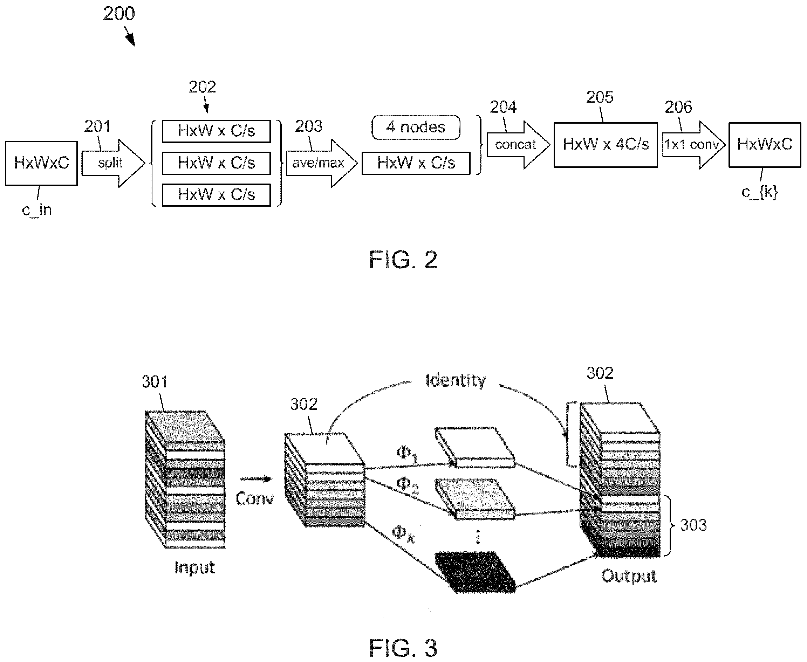

FIG. 2 depicts an example sequence 200 of splitting and concatenating channels to form an output node c_{k} according to the subject matter disclosed herein. An channels of an input node c_{k} is split at 201 using an example hyper-parameter s = 3 to form three channel groups 202. At 203, an average of each respective channel group is determined and concatenated at 204 with the output of the four intermediate nodes 0-3 forming 4C/s channels at 205. A 1x1 convolution is performed at 206 resulting in an output c_{k} having C channels.

Table 1 shows results for two example DARTS shrinkage architecture types (shrink type 0 and shrink type 1) for an example 19-layer neural network architecture. The shrink type 0 architecture is the example baseline neural network system described earlier and uses a hyper-parameter s = 1, whereas the shrink type 1 architecture uses a hyper-parameter s = 4. It should be noted that a shrinkage type architecture may use a hyper-parameter s of a single value, or may use multiple hyper-parameters s of different values.

**Table 1.**

| ------------ shrink_type = 0--------------- | ------------shrink_type = 1------------ |
|---|---|
| layer: 0, split: 1, input: 36, output: 144 | layer: 0, split: 4, input: 36, output: 36 |
| layer: 1, split: 1, input: 36, output: 144 | layer: 1, split: 4, input: 36, output: 36 |
| layer: 2, split: 1, input: 36, output: 144 | layer: 2, split: 4, input: 36, output: 36 |
| layer: 3, split: 1, input: 36, output: 144 | layer: 3, split: 4, input: 36, output: 36 |
| layer: 4, split: 1, input: 36, output: 144 | layer: 4, split: 4, input: 36, output: 36 |
| layer: 5, split: 1, input: 36, output: 144 | layer: 5, split: 4, input: 36, output: 36 |
| layer: 6, split: 1, input: 72, output: 288 | layer: 6, split: 4, input: 72, output: 72 |
| layer: 7, split: 1, input: 72, output: 288 | layer: 7, split: 4, input: 72, output: 72 |
| layer: 8, split; 1, input: 72, output: 288 | layer: 8, split: 4, input: 72, output: 72 |
| layer: 9, split: 1, input: 72, output: 288 | layer: 9, split: 4, input: 72, output: 72 |
| layer: 10, split: 1, input: 72, output: 288 | layer: 10, split: 4, input: 72, output: 72 |
| layer: 11, split: 1, input: 72, output: 288 | layer: 11, split: 4, input: 72, output: 72 |
| layer: 12, split: 1, input: 72, output: 288 | layer: 12, split: 4, input: 72, output; 72 |
| layer: 13, split: 1, input: 144, output: 576 | layer: 13, split: 4, input: 144, output: 144 |
| layer: 14, split: 1, input: 144, output: 576 | layer: 14, split: 4, input: 144, output: 144 |
| layer: 15, split: 1, input: 144, output: 576 | layer: 15, split: 4, input: 144, output: 144 |
| layer: 16, split: 1, input: 144, output: 576 | layer: 16, split: 4, input: 144, output: 144 |
| layer: 17, split: 1, input: 144, output: 576 | layer: 17, split: 4, input: 144, output: 144 |
| layer: 18, split: 1, input: 144, output: 576 | layer: 18, split: 4, input: 144, output: 144 |
| layer: 19, split: 1, input: 144, output: 576 | layer: 19, split: 4, input: 144, output: 144 |

As the location of a DARTS normal cell in a neural network architecture increases (i.e., becomes deeper), the number of output channels may progressively increase.

Table 2 shows some example details associated with ten (10) example shrinkage architecture (arch) types 0-9 that use average pooling with no batch normalization (BN). PDARTS refers to progressive DARTS. A shrink type 3 architecture, for example, provided the best accuracy of 97.49% with about a 10% reduction in flops as compared to the baseline example neural network system (shrink type 0 architecture) that included 3.42 M parameters with 532.5 M flop computations. Shrink-types 5, 6 and 8 provided comparable accuracies with about a 22% reduction in flops.

**Table 2. Example Shrinkage Architecture Types**

| arch | shrink_typ | flops | params | batch-size | epochs | top1 | time | | | |
|---|---|---|---|---|---|---|---|---|---|---|
| PDARTS | 1 | 373.24958 | 2.412622h | 128 | 600 | 96.92 | ('2021-01-17_23-58-38', '1695.48 min') | | | |
| PDARTS | 8 | 416.63404 | 2.833822h | 128 | 600 | 97.28 | ('2021-01-17_23-44-03', '1677.64 min') | | | |
| PDARTS | 2 | 417.07641 | 3.101230h | 128 | 600 | 97 | J⁻2021-01-18₋00-30-46','1727.07 min') | | | |
| PDARTS | 9 | 437.86771 | 3.165598K | 128 | 600 | 97.14 | ('2021-01-18_00-25-41', '1718.96 min') | | | |
| PDARTS | 4 | 439.63718 | 3.169918h | 128 | 600 | 97.04 | ('2021-01-17_23-50-04','1685.15 min') | | | |
| PDARTS | 5 | 465.73689 | 3.282238h | 128 | 600 | 97.47 | ('2021-01-17_23-29-49','1664.39 min') | | | |
| PDARTS | 7 | 474.14188 | 3.271006N | 128 | 600 | 97.34 | ('2021-01-17_23-53-37', '1687.62 min') | | | |
| PDARTS | 3 | 478.78675 | 3.365614N | 128 | 600 | 97.49 | ('2021-01-18_00-20-22', '1715.82 min') | | | |
| PDARTS | 6 | 482.98924 | 3.302974N | 128 | 600 | 97.41 | ('2021-01-17_23-44-50', '1679.08 min') | | | |
| PDARTS | 0 | 532.53446 | 3.423934N | 128 | 600 | 97.55 | ('2021-01-18_00-00-34', '1698.39 min') | | | |

Tables 3-6 show some example details of shrinkage architecture types 3, 5, 6 and 8. The box outline in each of Tables 3-6 highlight different input and output channel numbers for different layers of the example neural network architecture. Only the outputs of the first six layer of shrink type 3 architecture were shrunk. Shrink-types 5, 6 and 8 architectures had differing amounts of layers having outputs that were shrunk (i.e., different hyper-parameters s) indicated by the box outlines.

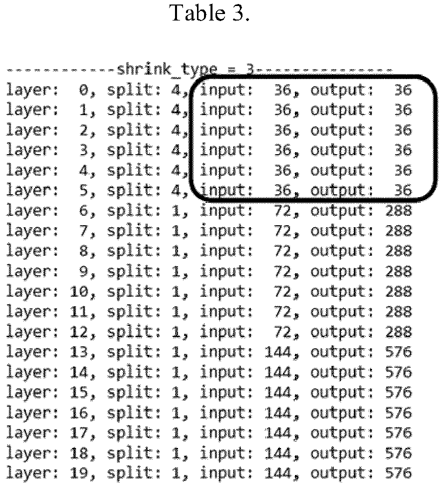

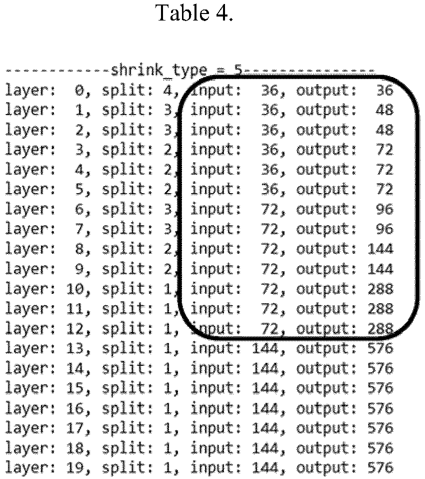

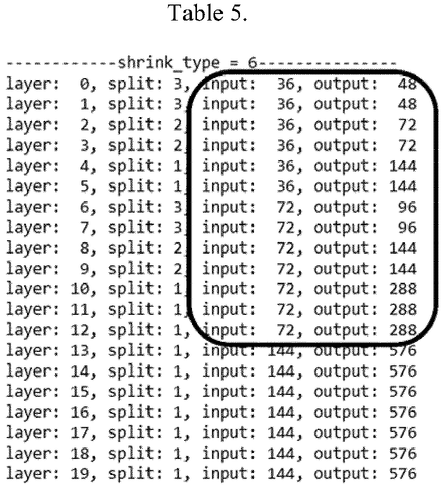

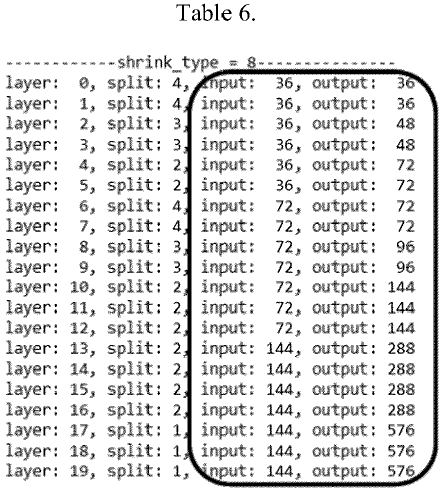

Average pooling may be used on the split channel outputs (i.e., average pooling) from the intermediate nodes 0-4 to form the output node c_{k}. For average pooling, c_{k} = (node1 + node2 + node3 + node4) / 4. Alternatively, maximum pooling may be used to form the output node c_{k} from the split channels. For maximum pooling, c_{k} = max(node1, node2, node3, node4). As yet another alternative is adaptive averaging (ada pooling), which uses a weighted averaging, to form the output node c_{k} from the split channels. For adaptive pooling, c_{k} = (node1 ^{∗} w1 + node2 ^{∗} w2 + node3 ^{∗} w3 + node4 ^{∗} w4) / 4.

After pooling, a batch normalization (BN) may optionally be added. Batch normalization may not change the results for average pooling or maximum pooling, but may provide a benefit for adaptive pooling. Table 7 shows example results for four example shrinkage architecture types for the three different pooling techniques with and without batch normalization. It should be noted that using adaptive pooling with batch normalization for shrink type 3 architecture results in a greater accuracy than the baseline example neural network architecture.

**Table 7.**

| **Pooling, BN** | **Shrink 3** | **Shrink 5** | **Shrink 6** | **Shrink 8** |
|---|---|---|---|---|
| Avg, wo BN | 97.49 | 97.47 | 97.41 | 97.28 |
| Avg, with BN | 97.33 | 97.38 | 97.37 | 97.10 |
| Max, wo BN | 97.47 | 97.35 | 97.51 | 97.36 |
| Max, with BN | 97.33 | 97.22 | 97.33 | 96-98 |
| Ada, wo BN | 97.38 | 97.28 | 97.36 | 97.18 |
| Ada, with BN | 97.66 | 97.29 | 97.39 | 97.32 |

To further reduce the number of computations associated with a DARTs normal cell, one or more ghost modules may be used to generate correlated and redundant feature maps from intrinsic feature maps by using, for example, linear transformation operators. FIG. 3 depicts an example layer of input feature maps 301 in which a set intrinsic feature maps 302 are generated using a convolution operation. One or more linear transformation operators Φ₁, Φ₂, ..., Φₖ may then be used to generate correlated and redundant feature maps 303 so that the total number of intrinsic feature maps 302 plus the total number of correlated and redundant feature maps 303 equal the total number of feature maps that would have been generated if a complete convolution operation had been performed on the input feature maps 301. An identity ghost module mapping preserves the intrinsic feature maps 302. The baseline example neural network system included 3.42 M parameters and 532.5 M flop computations for an accuracy of 97.55%. Shrinkage using ghost modules on the example neural network results in 2.46 M parameters and 371.3 M flops (a reduction of about 30.3%) with an accuracy of 97.40%.

Table 8 shows example results for four example shrinkage architecture types with and without Ghost modules for the three different pooling techniques and with and without batch normalization.

**Table 8.**

| **shrink** | **Ghost** | **Paras (M)** | **Flops (M)** | **Avg-BN** | **Max-BN** | **Ada+BN** |
|---|---|---|---|---|---|---|
| 3 | - | 3.37 | 478.8 | 97.49 | 97.47 | 97.66 |
| 3 | + | 2.52 | 367.1 | 97.23 | 97.20 | 97.34 |
| 5 | - | 3.28 | 465.7 | 97.47 | 97.35 | 97.29 |
| 5 | + | 2.43 | 354.1 | 97.19 | 97.11 | 97.25 |
| 6 | - | 3.30 | 482.9 | 97.41 | 97.51 | 97.39 |
| 6 | + | 2.46 | 371.3 | 97.06 | 97.40 | 97.15 |
| 8 | - | 2.83 | 416.6 | 97.28 | 97.36 | 97.32 |
| 8 | + | 1.99 | 304.9 | 97.08 | 96.92 | 97.05 |

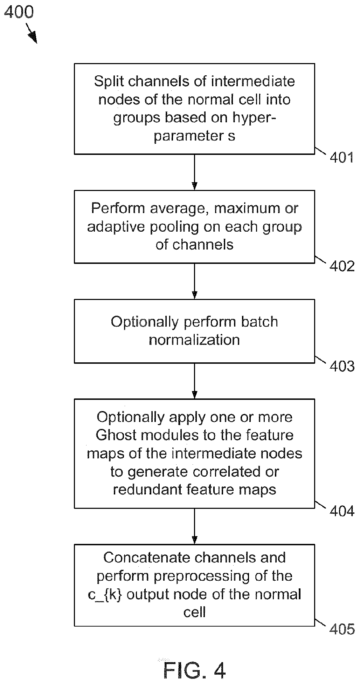

FIG. 4 is a flowchart of an example embodiment of a method 400 for reducing computation of a differentiable architecture search according to the subject matter disclosed herein. At 401, a hyper-parameter s is selected and used to divide the channels of the intermediate nodes 0-3 into s groups. At 402, average pooling, maximum pooling or adaptive pooling is performed on each of the groups of channels. At 403, each group of channels may optionally be batched normalized. At 404, one or more Ghost modules may be optionally applied to each group of channels. At 405, the channels are concatenated to form output channels of the c_{k} node and preprocessed to form input channels of the next layer.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method for reducing computation of a differentiable architecture search, the method comprising:
forming an output node having a channel dimension that is one-fourth of a channel dimension of a normal cell for a first layer of the cells in a neural network architecture by averaging channel outputs of intermediate nodes of the normal cell; and
preprocessing the output node having the channel dimension that is one-fourth of the channel dimension of a normal cell using a 1 × 1 convolution to form channels of input nodes for a second layer of the cells in the neural network architecture, the second layer being immediately subsequent to the first layer.

2. The method of claim 1, wherein forming the output node having a single channel for the normal cell for the first layer of the cells in the neural network architecture comprises:
forming s groups of channel outputs of the intermediate nodes in which each group includes a total number of channel outputs of the intermediate nodes divided by a splitting parameter s;
forming an average channel output for each group of channel outputs by averaging each group of channel outputs; and
forming the output node by concatenating the average channel output for each group of channels with channel outputs of the intermediate nodes of the normal cell.

3. The method of claim 1 or 2, further comprising changing a number of output channels of the first layer of the cells in the neural network architecture with respect to a number of input channels of the first layer.

4. The method of claim 3, wherein changing the number of output channels of the first layer of the cells in the neural network architecture comprises increasing the number of output channels of the first layer of the cells in the neural network architecture with respect to the number of input channels of the first layer.

5. The method of any one of claims 1 to 4, wherein forming the output node having the channel dimension that is one-fourth of the channel dimension of a normal cell comprises forming the output node by averaging channel outputs of intermediate nodes of the normal cell or by selecting a maximum output from intermediate nodes of the normal cell.

6. The method of any one of claims 1 to 4, wherein forming the output node having the channel dimension that is one-fourth of the channel dimension of a normal cell further comprises forming the output node by averaging channel outputs of intermediate nodes of the normal cell or by performing a weighted average of the channel outputs of intermediate nodes of the normal cell.

7. The method of claim 6, wherein the weighted average is performed on channel outputs of intermediate nodes,
the method further comprising batch normalizing the output node of the first layer of the cells in the neural network architecture.

8. A method for reducing computation of a differentiable architecture search, the method comprising:
forming an output node having a channel dimension that is one-fourth of a channel dimension of a normal cell for a first layer of the cells in a neural network architecture by selecting a maximum channel output from intermediate nodes of the normal cell; and
preprocessing the output node having the channel dimension that is one-fourth of the channel dimension of a normal cell using a 1 × 1 convolution to form channels of input nodes for a second layer of the cells in the neural network architecture, the second layer being immediately subsequent to the first layer.

9. The method of claim 8, wherein forming the output node having the channel dimension that is one-fourth of the channel dimension of a normal cell comprises:
forming s groups of channel outputs of the intermediate nodes in which each group includes a total number of channel outputs of the intermediate nodes divided by a splitting parameter s;
selecting a maximum channel output for each group of channel outputs; and
forming the output node by concatenating the maximum channel output for each group of channels with channel outputs of the intermediate nodes of the normal cell.

10. The method of claim 8 or 9 further comprising changing a number of output channels of the first layer of the architecture with respect to a number of input channels of the first layer.

11. The method of claim 10, wherein changing the number of output channels of the first layer of the cells in neural network architecture comprises increasing the number of output channels of the first layer of the cells in the neural network architecture with respect to the number of input channels of the first layer.

12. The method of any one of claims 8 to 11, wherein forming the output node having the channel dimension that is one-fourth of the channel dimension of a normal cell comprises forming the output node by selecting a maximum output from intermediate nodes of the normal cell or by averaging channel outputs of intermediate nodes of the normal cell.

13. The method of any one of claims 8 to 11, wherein forming the output node having the channel dimension that is one-fourth of the channel dimension of a normal cell further comprises forming the output node by selecting a maximum output from intermediate nodes of the normal cell or by performing a weighted average of channel outputs of intermediate nodes of the normal cell.

14. The method of any one of claims 11 to 13, wherein a weighted average is performed on channel outputs of intermediate nodes,
the method further comprising batch normalizing the output node of the first layer of the cells in the neural network architecture.

15. The method of any one of claims 1 to 14, further comprising generating a first predetermined number of intrinsic feature maps for the first layer of the cells in the neural network architecture, the first predetermined number being less than a second predetermined number that is equal to a total number of output nodes for the first layer; and
using one or more linear transformation operators to generate a third predetermined number of correlated or redundant output nodes for the first layer, the first predetermined number plus the third predetermined number equaling the second predetermined number.

16. A method for reducing computation of a differentiable architecture search, the method comprising:
forming an output node having a channel dimension that is one-fourth of a channel dimension of a normal cell for a first layer of a neural network architecture by performing a weighted average of channel outputs of intermediate nodes of the normal cell; and
preprocessing the output node having the channel dimension that is one-fourth of the channel dimension of a normal cell using a 1 × 1 convolution to form channels of input nodes for a second layer of the cells in the neural network architecture, the second layer being immediately subsequent to the first layer.

17. The method of claim 16, wherein forming the output node having the channel dimension that is one-fourth of the channel dimension of a normal cell comprises:
forming s groups of channel outputs of the intermediate nodes in which each group includes a total number of channel outputs of the intermediate nodes divided by a splitting parameter s;
forming a weighted-average channel output for each group of channel outputs by weight averaging each group of channel outputs; and
forming the output node by concatenating the weighted-average channel output for each group of channels with channel outputs of the intermediate nodes of the normal cell.

18. The method of claim 16 or 17, wherein forming the output node having the channel dimension that is one-fourth of the channel dimension of a normal cell further comprises forming the output node by performing a weighted average of channel outputs of intermediate nodes of the normal cell or by averaging channel outputs of intermediate nodes of the normal cell.

19. The method of claim 16 or 17, wherein forming the output node having the channel dimension that is one-fourth of the channel dimension of a normal cell further comprises forming the output node by performing a weighted average of channel outputs of intermediate nodes of the normal cell or by selecting a maximum output from intermediate nodes of the normal cell.
